Europäisches Patentamt

European Patent Office

Office européen des brevets

(11) Veröffentlichungsnummer: **0 381 975**
**A2**

## (12) EUROPÄISCHE PATENTANMELDUNG

(21) Anmeldenummer: 90101161.9

(22) Anmeldetag: 20.01.90

(51) Int. Cl.⁵: **H01M 4/62, H01M 10/06, H01M 4/56, H01M 4/22**

(30) Priorität: 08.02.89 DE 3903656

(43) Veröffentlichungstag der Anmeldung:
16.08.90 Patentblatt 90/33

(84) Benannte Vertragsstaaten:
AT BE DE DK ES FR GB IT SE

(71) Anmelder: **VARTA Batterie Aktiengesellschaft**
**Am Leineufer 51**
**D-3000 Hannover 21(DE)**

(72) Erfinder: **Salamon, Klaus, Dr. Dipl.-Phys.**
**Tucholskystrasse 60**
**D-6000 Frankfurt am Main 70(DE)**

(74) Vertreter: **Kaiser, Dieter Ralf, Dipl.-Ing.**
**Gundelhardtstrasse 72**
**D-6233 Kelkheim/Ts.(DE)**

(54) **Bleiakkumulator mit grosser Kältehochstromleistung.**

(57) In einem Bleiakkumulator, der auch über lange Betriebszeiten hinweg zu hohen Stromabgaben in der Kälte (Kaltstart) befähigt ist, wird die negative Elektrode mit dem notwendigen Expander im wesentlichen aus einer ligninhaltigen Depotsubstanz, vorzugsweise Holzmehl, versorgt, welches jedoch Mischungsbestandteil der aktiven Masse der positiven Elektrode ist und dort während der Formation und Zyklisierung einem oxidativen Abbau, bei dem lösliche Ligninderivate freigesetzt werden, unterliegt. Eine solche Expanderquelle erlaubt es, die negative Masse ohne Expanderzusatz herzustellen und insbesondere eine Überdosierung, wie sie zwangsläufig sonst zu Anfang der Betriebsdauer vorliegt, zu vermeiden. Über Konzentration und Teilchengröße des Holzmehls lassen sich die Stärke der Expanderzufuhr zur negativen Elektrode und deren Dauer weitgehend moderieren.

## Bleiakkumulator mit großer Kältehochstromleistung

Die Erfindung betrifft einen Bleiakkumulator mit positiven und negativen Elektroden, zwischenliegenden Separatoren und einem Säureelektrolyten, welcher zur Verbesserung der Kältehochstromleistung einen Expander enthält.

Es ist bekannt, daß die Strombelastbarkeit von Bleiakkumulatoren, deren Elektroden aus Gitterplatten mit den darin eingestrichenen aktiven Massen oder auch aus Röhrchenplatten bestehen, durch die Verwendung von Spreizmitteln oder Expandern erheblich verbessert werden kann. Insbesondere kommt dieser günstige Einfluß der Spreizmittel bei Kälte-Entladungen zum Tragen. Sie spielen daher in Starterbatterien eine wichtige Rolle, die in der Lage sein müssen, bei weit unter dem Gefrierpunkt des Wassers liegenden Temperaturen das Kraftfahrzeug noch zuverlässig zu starten.

Spreizmittel sind vorzugsweise hochmolekulare organische Substanzen, in Schwefelsäure nur begrenzt löslich und spezifische Bestandteile der negativen aktiven Masse. Sie werden deshalb in der Regel bereits bei der Herstellung dieser Masse aus Bleistaub, Bleioxid und Schwefelsäure in der Pastenmischung dispergiert, und die fertige Mischung wird darauf in die Gitterplatten eingestrichen

Spreizmittel wirken in der Weise, daß sie auf die Flächen der Bleikristalle in frisch geladenen Elektroden aufziehen und verhindern, daß das beim Entladen entstehende Bleisulfat die tieferliegenden Schichten des metallischen Bleis abdeckt und dadurch die aktive Elektrodenoberfläche blockiert.

Die bekanntesten Spreizmittel sind Ligninderivate, insbesondere Ligninsulfonsäuren bzw. deren Na-Salze. Unter diesen ist das Oxylignin mit dem Handelsnamen "Vanisperse" (Technisches Produkt der Firma Borregaard Ind. Ltd., Sarpsborg, Norwegen) weit verbreitet. Dieses Produkt verleiht der negativen aktiven Masse, in einer Konzentration von 0,1 bis 0,3 % zugesetzt, eine große innere Oberfläche von anfangs ca. 0,6 m²/g aktive Masse.

Gemäß US-PS 2 436 299 kommen als Quelle für lösliche Expander auf Ligninbasis viele ligninhaltige Pflanzenstoffe wie Stroh, Torfmoos, Maiskolben oder das Sägemehl verschiedenster Baumarten infrage, wobei man diese Stoffe mit heißer Natronlauge aufschließt, den ligninhaltigen Extrakt, der ggf. auch huminsaure Salze und Harze enthält, von festen Zellulosebestandteil abtrennt, mit Ruß als Absorbens für die löslichen Ligninsalze versetzt und eindampft. Der Trockenrückstand wird dann der negativen Paste als Expander zugemischt.

Daß gemäß US-PS 3 446 670 ein Ligninzusatz zur positiven Elektrodenpaste die Kaltstartleistung einer Bleibatterie verbessern soll, stellt einen Ausnahmefall in der Patentliteratur dar.

Zwar nennt auch die DE-AS 1 571 965 gerade mit Bezug auf einen Bleiakkumulator mit großer Kältehochstromleistung als fördernde Mittel sulfatfreie Verbindungen von Metallen der Zinkgruppe, die der positiven Masse zugesetzt werden, und aus der DE-PS 27 56 355 ist eine Plusmasse bekannt, die als Zusätze Derivate von Harzsäuren oder Kolophonium enthält, jedoch sind zumindest die erstgenannten Additive hinsichtlich ihrer Wirkungsweise mit den Lignin-Expandern nicht vergleichbar.

Es hat sich allerdings gezeigt, daß die Kaltstartleistung der Batterie im Laufe ihrer Lebensdauer stark abnimmt, weil die bei der Herstellung der negativen aktiven Masse einmalig zugegebene Menge des Spreizmittels, namentlich Oxylignin, abgebaut wird. Zum anderen wurde ein enger Zusammenhang zwischen der Expandermenge und der Ladungsaufnahme festgestellt, derart, daß die elektrische Ladungsaufnahme der negativen Platte um so niedriger ist, je höher die Expandermenge in der negativen Masse gewählt worden war. Dieser Befund schließt die Möglichkeit aus, durch eine Überdosierung des Spreizmittels in der negativen Masse die Kaltstartleistung über die Betriebszeit der Batterie aufrechtzuerhalten.

Der Erfindung liegt daher die Aufgabe zugrunde, einen Bleiakkumulator nach dem eingangs formulierten Gattungsbegriff anzugeben, bei welchem die negative Elektrodenplatte aus einer außerhalb derselben befindlichen Quelle mit Lignin-Expander versorgt wird und durch moderate Zufuhr eine Überspreizung verhindert wird.

Die Aufgabe wird erfindungsgemäß mit einem Bleiakkumulator gelöst, wie er im Patentanspruch 1 angegeben ist.

Die erfindungsgemäße Maßnahme erlaubt es, eine negative Masse vollkommen ohne Expanderzusatz herzustellen. Stattdessen wird ihr Bedarf an Expander aus einer ligninhaltigen Depotsubstanz gedeckt, die erst während der Plattenformation sowie während des Zyklenbetriebes durch oxidativen Abbau lösliche Ligninderivate liefert. Diese werden dann von der negativen Platte aufgenommen.

Als besonders günstiger Ort für die in situ-Bildung des Expanders hat sich die positive Elektrode erwiesen, weshalb erfindungsgemäß die ligninhaltige Depotsubstanz der positiven Masse beigemischt ist.

Geeignete Depotsubstanzen sind schon genannte pflanzliche Stoffe wie Stroh, Torfmoos, Maiskolben, ferner das Holz von Birken, Kiefern, Fichten, Roteichen oder Feldahorn, jeweils in zerkleinerter Form. Diese Stoffe können auch untereinander gemischt sein.

Besonders vorteilhaft für die Verarbeitung ist jedoch Holzmehl, beispielsweise von Pappelholz, aber ohne Bevorzugung einer bestimmten Baumart.

Erfindungsgemäß liegt der Holzmehl-Anteil in der aktiven Masse der positiven Elektrode, auf 1000 g Bleistaub bezogen, zwischen 0,5 und 5 g, vorzugsweise zwischen 1 und 3 g.

Durch ein relativ breites Teilchengrößenspektrum des Holzmehls ist gewährleistet, daß sich der oxidierende Aufschluß des Holzes in der Akkumulatorsäure über eine lange Betriebsdauer erstreckt, so daß die negative Platte kontinuierlich, dabei nicht über den momentanen Bedarf hinausgehend, mit Expander versorgt wird. Das Teilchengrößenspektrum sollte in einem Bereich zwischen 0,01 mm und 1,5 mm liegen.

Es ist für den erfindungsgemäßen Bleiakkumulator von Vorteil, wenn auch der negativen Elektrodenpaste in herkömmlicher Weise ein Expander direkt zugemischt wird. Dessen Menge sollte jedoch nur 0,01 % bis 0,15 % betragen.

Das beim oxidativen Abbau des Holzmehls freigesetzte Spreizmittel setzt sich aus Ligninsulfosäuren zusammen, die dem Handelsprodukt Vanisperse (Oxylignin) weitgehend entsprechen.

Durch die erfindungsgemäße Maßnahme wird das Verhalten eines Bleiakkumulators, insbesondere einer Starterbatterie, sogar in mehrfacher Weise günstig beeinflußt:

Die Kaltstartleistung bleibt über die Betriebszeit konstant.

Durch entsprechende Dosierung der Holzmehlmenge in der positiven Masse kann erreicht werden, daß durch ständige Nachlieferung kleiner Expandermengen aus der positiven Platte die negative Platte immer ein Angebot von frischem Expander zur Verfügung hat, um auf ausreichender Kaltstartleistung über die Betriebszeit zu bleiben.

Die Versorgung der negativen aktiven Masse mit Expander von der positiven Elektrode her macht es möglich, die negative Masse selbst von einem Expanderzusatz freizuhalten oder diesen allenfalls auf eine geringe Initialzugabe zu beschränken, durch die bereits eine Verbesserung der Ladungsaufnahme erreicht wird.

Die Blockkastenformation wird vereinfacht.

Hierbei handelt es sich bekanntlich um die erste "Ladung" in den endgültigen Zellen- oder Batteriegefäßen. Die Zellen- oder Blockkastenformation findet also unter den Bedingungen des Engeinbaues mit Scheidern und entsprechendem Säureunterschuß statt, was für gegebene Formationsströme eine stärkere Erwärmung nach sich zieht. Für einen bereits anwesenden Expander ist diese Erwärmung, sofern die Formationstemperatur 65°C übersteigt, jedoch schädlich, weil er oberhalb dieser Temperatur im sauren Medium zerstört wird. Dies bedeutet eine Einschränkung der Blockkastenformation, da man aus dem genannten Grunde eine Kühlung vorsehen und mit entsprechend geringer Stromdichte über längere Zeit formieren müßte. Es ist jedoch zu erwarten, daß mit Hilfe der erfindungsgemäßen Maßnahme die Temperaturbegrenzung der Blockkastenformation weitgehend aufgehoben werden kann, da über die Expanderquelle in der positiven Platte neue Expandersubstanz nachgebildet wird und so die während der Formationsphasen mit hoher Temperatur zerstörten Expandermengen in der negativen Platte wieder ergänzt werden.

Der Erfolg der erfindungsgemäßen Maßnahme konnte durch folgenden Versuch bestätigt werden:

Es wurden gemäß nachstehenden Rezepturen je eine positive und eine negative Masse hergestellt und als Paste für positive und negative Starterplatten verwendet.

Die Angaben der Rezepturen beziehen sich jeweils auf 1000 g Bleistaub der Bezeichnung GOX, der zu 70 % aus PbO besteht.

Positiver Ansatz:

200 g Gesamtwasser
60 g Monohydrat aus Mischsäure der Dichte 1.4 g/ml
und 5 g SHolzmehl der Type BK 40/90 Lignozell* (Ellwanger Holzmühle)

Negativer Ansatz:

190 g Gesamtwasser
60 g Monohydrat aus Mischsäure der Dichte 1.4 g/ml
4g Ruß
4g $BaSO_4$
kein Vernisperse.

Dabei stellten sich Rohdichten von 4.0 $g/cm^3$ für die positive und 4.1 $g/cm^3$ für die negative Masse ein.

Die pastierten Platten wurden nach einer Curingzeit von 72 h mit einer Ladungsmenge von ca. 320 Ah/kg positiver Masse in einer Zeit von 20 h im Trog bei einer Säuredichte d = 1,10 formiert.

Zur Überprüfung der Bildung von Oxyligninen in der positiven Masse durch oxidativen Angriff auf das Holzmehl sowie dessen Diffusion in die spreizmittelfreie negative Platte wurde eine spezielle naßchemische Analytik, auf photometrischen Messungen beruhend, eingesetzt. Das Ergebnis dieser Analyse weist nach, daß tatsächlich bereits nach der Formation in der negativen Masse eine Menge von 0.12 % expanderähnlicher Substanz gefunden wird. Die HPLC-Analyse (High Performance Liquid Chromatography) dieser organischen Substanz (nicht beigefügt) läßt erkennen, daß es sich dabei um ein Vanisperseähnliches Produkt handelt.

Die Wirksamkeit dieser Substanz als Spreizmittel wird durch die für die ursprüngliche spreizmittelfreie negative Masse sehr hohe innere Oberfläche (BET) von 0.61 m$^2$/g belegt. Ferner läßt sich aus Porogrammen, die man von beiden Plattenspezies herstellt, eine hohe Porosität ablesen. Dabei ist insbesondere diejenige der negativen Platte vergleichbar mit der Porosität einer auf der Grundlage einer herkömmlichen Pastenrezeptur, d.h. mit einem direkten Spreizmittelzusatz von ca. 3 % hergestellten und formierten Platte.

## Ansprüche

1. Bleiakkumulator mit positiven und negativen Elektroden, zwischenliegenden Separatoren und einem Säureelektrolyten, welcher zur Verbesserung der Kältehochstromleistung einen Expander enthält dadurch gekennzeichnet, daß der aktiven Masse der positiven Elektrode eine ligninhaltige Depotsubstanz beigemischt ist, aus der während der Formation und des Zyklenbetriebes der Expander durch oxidativen Aufschluß freisetzbar ist.

2. Bleiakkumulator nach Anspruch 1, dadurch gekennzeichnet, daß die ligninhaltige Depotsubstanz ein zerkleinertes Pflanzenmaterial ist.

3. Bleiakkumulator nach Anspruch 2, dadurch gekennzeichnet, daß das Pflanzenmaterial, einzeln oder miteinander gemischt, Stroh, Torfmoos, Maiskolben oder Holz ist.

4. Bleiakkumulator nach Anspruch 3, dadurch gekennzeichnet, daß das Pflanzenmaterial Holzmehl ist.

5. Bleiakkumulator nach Anspruch 4, dadurch gekennzeichnet, daß der Holzmehl-Anteil in der aktiven Masse der positiven Elektrode 0,5 bis 5 g, bezogen auf 1000 g Bleistaub, beträgt.

6. Bleiakkumulator nach Anspruch 5, dadurch gekennzeichnet, daß der Holzmehl-Anteil in der aktiven Masse der positiven Elektrode 1 bis 3 g, bezogen auf 1000 g Bleistaub, beträgt.

7. Bleiakkumulator nach den Ansprüchen 4 bis 6, dadurch gekennzeichnet, daß die Teilchengröße des Holzmehls 0,01 bis 1,5 mm beträgt.

8. Bleiakkumulator nach einen der Ansprüche 1 bis 7, dadurch gekennzeichnet, daß der negativen aktiven Masse 0,01 bis 0,15 % eines herkömmlichen Expanders beigemischt sind.